# EUROPEAN PATENT APPLICATION

(11) **EP 2 664 750 A2**
(43) Date of publication of application: **20.11.2013**
(21) Application number: 13167167.9
(22) Date of filing: 09.05.2013
(51) Int. Cl.: F01K 13/02

(54) **Systems and methods for active temperature control in steam turbine**

(30) Priority: 15.05.2012 US 201213471614
(71) Applicant: General Electric Company, Schenectady, New York 12345 (US)
(72) Inventor: Mundra, Kamlesh, Schenectady, NY New York 12345 (US); hernandez Sanchez, Nestor, Schenectady, NY New York 12345 (US); Willett, Fred Thomas, Schenectady, NY New York 12345 (US); Pang, Raymond, Schenectady, NY New York 12345 (US)
(74) Representative: Cleary, Fidelma

(57) **Abstract**

Systems and methods for actively controlling the temperature in at least portions of a steam path associated with a steam turbine (102) are disclosed. An active temperature control unit (120) is configured to activate one or more attemperators (108) to maintain temperatures in at least a portion of the steam path below a pre-determined threshold. By maintaining the temperature, those portions of the steam path may use less expensive materials.

## Description

### TECHNICAL FIELD

Embodiments of the invention relate generally to steam turbines, and more particularly, to systems and methods for active temperature control of steam turbine and power plant components.

### BACKGROUND

Steam turbines may be used to extract energy from steam. High temperatures in portions of the steam path may require special materials and/or construction techniques. This increases manufacturing and maintenance costs.

### BRIEF DESCRIPTION OF THE INVENTION

Gas turbines may be used in conjunction with heat recovery steam generators and steam turbines to provide electrical power in combined cycle power plants, as well as in other applications. To accommodate varying loads, power output of the gas turbines may be changed between higher and lower power output states. The transition from a higher power output state to a lower output state with regard to a gas turbine is referred to as a "turndown." Due to various thermodynamic and operational considerations, as a result of turndown, temperatures in the steam turbine, or sections of the steam turbine, may increase. To accommodate these increased temperatures experienced during turndown, steam turbines, associated plant equipment, or portions thereof may need to be built using materials suitable for operation with those increased temperatures. For example, stages in the steam path of the steam turbine or cold reheat ("CRH") piping in a power plant may need to be constructed of more expensive materials.

Some or all of the above needs and/or problems may be addressed by certain embodiments of the invention. Certain embodiments may include systems and methods for actively controlling temperature in at least portions of a steam path associated with a steam turbine or power plant. According to one embodiment of the invention, a system including an active temperature control unit is disclosed. The active temperature control unit is configured to determine temperature at one or more points in the steam path and activate one or more attemperators at least partly in response to the temperature exceeding a pre-determined threshold. In other implementations, cooling air may be introduced into the gas turbine exhaust to cool the hot exhaust gas temperature going into a heat recovery steam generator ("HRSG") to mediate temperatures. By reducing temperature at those points in the steam path, less expensive materials may be used, stress on components in the steam path may be reduced, and so forth. For example, the exhaust temperature of the high pressure steam turbine may be controlled to allow the use of carbon steel in cold reheat piping downstream of the exhaust.

In another embodiment, a method is provided. The method can include determining a temperature at one or more pre-determined locations in a steam path of a steam turbine; when the temperature is at or above a pre-determined threshold, activating one or more attemperators configured to reduce the temperature at least at the one or more pre-determined locations; and when the temperature is below a pre-determined threshold, deactivating the one or more attemperators.

Another embodiment may include changing an operating mode of the one or more attemperators when the temperature is at or above a pre-determined threshold. When at or above the pre-determined threshold, the operating mode of the one or more attemperator may change from active management of a given steam temperature such as a high pressure ("HP") throttle temperature to active management of the steam temperature at a given steam path location. In this embodiment, the attemperators may be active with a given HP throttle temperature setpoint and when the given steam path location temperature exceeds the threshold, an attemperation setpoint will change to the location threshold temperature. Thus, two temperatures in the steam path may be monitored and attemperation is based on whichever location requires cooling based on the pre-determined thresholds.

In yet another embodiment, one or more computer readable media storing computer-executable instructions can be provided. The computer-executable instructions can configure at least one processor to perform operations comprising: receiving indication of a gas turbine turndown from a first power output to a second power output, wherein the second power output is lower than the first power output; and based at least in part on the indication, activating one or more attemperators in a steam turbine coupled to the gas turbine, the one or more attemperators configured to reduce a temperature in at least a portion of a steam path of the steam turbine or cold reheat piping.

Other embodiments, systems, methods, apparatus, aspects, and features of the invention will become apparent to those skilled in the art from the following detailed description, the accompanying drawings, and the appended claims.

### BRIEF DESCRIPTION OF THE DRAWINGS

The detailed description is set forth with reference to the accompanying drawings, which are not necessarily drawn to scale. The use of the same reference numbers in different figures indicates similar or identical items.
FIG. 1 is a diagram of an architecture comprising a steam turbine unit with an active temperature control unit according to an embodiment of the invention.
FIG. 2 is an illustrative graph of temperature with and without active temperature control according to an embodiment of the invention.
FIG. 3 is a flow diagram of a process of using attemperators to actively control temperatures according to an embodiment of the invention.
FIG. 4 is a flow diagram of another process of using attemperators to actively control temperatures according to another embodiment of the invention.

### DETAILED DESCRIPTION OF EMBODIMENTS OF THE INVENTION

Illustrative embodiments of the invention will now be described more fully hereinafter with reference to the accompanying drawings, in which some, but not all embodiments of the invention are shown. The invention may be embodied in many different forms and should not be construed as limited to the embodiments set forth herein; rather, these embodiments are provided so that this disclosure will satisfy applicable legal requirements. As noted above, like numbers refer to like elements throughout.

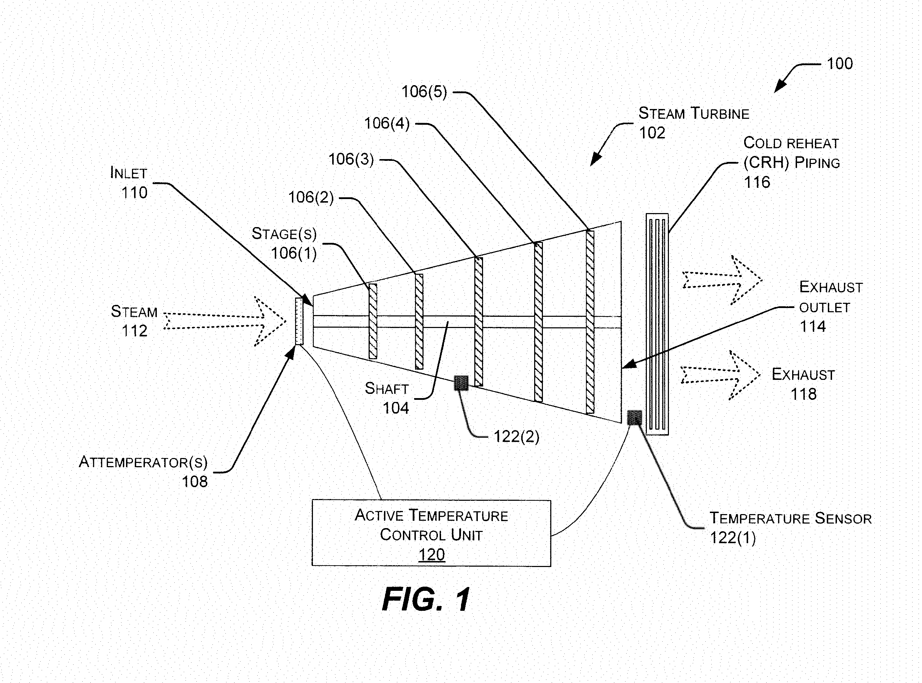

FIG. 1 is a diagram of an architecture 100 comprising a steam turbine 102, or a portion thereof. This steam turbine 102 comprises a shaft 104 to a rotor having one or more rotor stages 106(1), 106(2), 106(3), 106(4), 106(5), ...106(R) may be coupled. The steam turbine 102 may comprise a high pressure section, an intermediate pressure section, a low pressure section, and so forth. Five stages 106, also known as turbine stages, are depicted here for illustration and not by way of limitation. In other implementations, the steam turbine 102 may comprise more or fewer stages 106. An electrical generator, air compressor, propeller or other device may be coupled to the shaft 104.

The stages 106 comprise a plurality of blades. The stages 106 may be formed from a single piece of material, or from several pieces of material. For example, the stages 106 may comprise two or more pieces of material welded together. The material, as well as the welds, has operating temperatures within which their performance is satisfactory. Excursions outside of these operating temperatures may result in undesired operation or failure. For example, the welds introduce points which may fail when exposed to temperatures beyond a pre-determined operating temperature. Different materials exhibit different operating temperatures within which their use is appropriate. For example, and not by way of limitation, in a low temperature range where the working fluid such as steam or water is at or below about 750° Fahrenheit ("F"), carbon steels may be used. In comparison, high temperatures above 750° F may require more expensive materials.

The steam turbine 102 comprises one or more attemperators 108. The one or more attemperators 108 are configured to introduce a coolant into at least a portion of the steam turbine. This coolant may comprise one or more of liquid water, steam, and so forth. Introduction of the coolant reduces the temperature downstream of the attemperators 108. The one or more attemperators 108 may be in one or more sections of the steam turbine 102, such as a high pressure section, an intermediate pressure section, a low pressure section, and so forth. For example, a reheat attemperator 108 may be used to manage temperatures in the intermediate and/or low pressure section. The attemperators 108 may be operated short of a saturation point.

In some implementations, cooling air may be injected or leaked into gas turbine exhaust which supplies the steam 112 to the steam turbine 102. As described below, one or more of the attemperators 108 or injection of cooling air into the gas turbine exhaust are used to manage temperatures in at least portions of the steam path.

An inlet 110 is depicted, within which steam 112 is introduced. The steam 112 may be generated by a nuclear reactor, a geothermal source, a gas turbine, a heat recovery steam generator, a boiler, and so forth. The steam 112 travels from the inlet 110 to an exhaust outlet 114 of the steam turbine 102. Cold reheat ("CRH") piping 116 may be disposed proximate to at least a portion of the exhaust outlet 114 to recover at least a portion of the thermal energy from the exhaust 118. CRH piping 116 carries a working fluid which acquires heat from the exhaust 118 and returns that heat to a device such as a heat recovery steam generator. Because the CRH piping 116 is exposed to the exhaust 118, the temperature of the exhaust 118 may be managed such that the exhaust temperature does not exceed the operating temperature of the material used in the piping.

An active temperature control unit 120 is coupled to the one or more attemperators 108 and/or cooling air injectors of a heat recovery steam generator or a gas turbine, and may be coupled to one or more sensors. The active temperature control unit 120 is configured to activate one or more of the attemperators 108 to control the temperature of at least a portion of the steam path. The active temperature control unit 120 may comprise one or more of analog electronics devices, a processor, a computer-readable storage media, input/output devices, and so forth. In some implementations, the active temperature control unit 120 may comprise a module within control instructions stored in the computer-readable storage media and configured to execute on the processor.

The sensors may include, but are not limited to, one or more temperature sensors 122(1) and 122(2) as depicted here, a flow sensor, or a pressure sensor. While two temperature sensors 122 or shown, in other implementations the number and placement of the temperature sensors may vary. The active temperature control unit 120 may also receive signals, data, or other indicators from other devices such as gas turbines, heat recovery steam generators, and so forth. For example, in one implementation, the activate temperature control unit 120 may receive an indication that one or more gas turbines coupled to a heat recovery steam generator which, in turn, provides steam to the steam turbine is transitioning to a turndown state. As described above, the change from a higher power output state to a lower output state of the gas turbine is referred to as a "turndown." When the gas turbine is in a turndown condition, the steam turbine 102 or portions thereof may experience an increase in temperature. For example, temperatures at the CRH piping 116 may increase from about 750° F to 770° F. The active temperature control unit 120 is configured to maintain portions of the steam path within pre-determined operating temperatures by activating and deactivating the one or more attemperators 108, or changing setpoint location from one steam path location to another.

In one implementation, the active temperature control unit 120 may be configured to activate the one or more attemperators 108 to keep a temperature of the CRH piping 116 below a specific level. The active temperature control unit 120 may use sensor data, such as from the temperature sensor 122. For example, when a gas turbine enters a turndown state and the temperature of the exhaust 118 increases, the active temperature control unit 120 may activate the one or more attemperators 108. One technical effect of this embodiment is that this prevents overheating of the CRH piping 116 and allows the CRH piping 116 to use less expensive materials suited to the lower operating temperatures.

In another implementation, the active temperature control unit 120 may be configured to activate the one or more attemperators 108 based at least in part on the operating condition of other devices coupled to the steam turbine 102. For example, based on a throttle setting of a gas turbine, settings of a heat recovery steam generator, and so forth, the active temperature control unit 120 may be configured to activate the one or more attemperators 108. A technical effect of this embodiment is to prevent overheating of certain steam turbine components and/or HRSG components, and allow certain components to use less expensive materials suited to the lower operating temperatures.

The active temperature control unit 120 may be configured to maintain temperatures for other portions of the steam path by activating the one or more attemperators 108. In one implementation, active temperature control may lower operating temperatures within at least a portion of the steam path in the steam turbine 102 such that one or more stages 106 may use lower temperature materials. Use of these lower temperature materials for construction of the stages may reduce the overall cost of the steam turbine 102.

In another implementation, the temperature of steam 112 entering the inlet 110 is uncontrolled by the active temperature control unit 120. In this implementation, the active temperature control unit 120 thus is configured to control the temperatures of the steam path within or downstream of the steam turbine 102. This control may include the activation of one or more valves, switches, nozzles, attemperators, and so forth. Again, a technical effect of this embodiment is to prevent overheating of certain steam turbine, and/or HRSG components, and allow certain components to use less expensive materials suited to the lower operating temperatures.

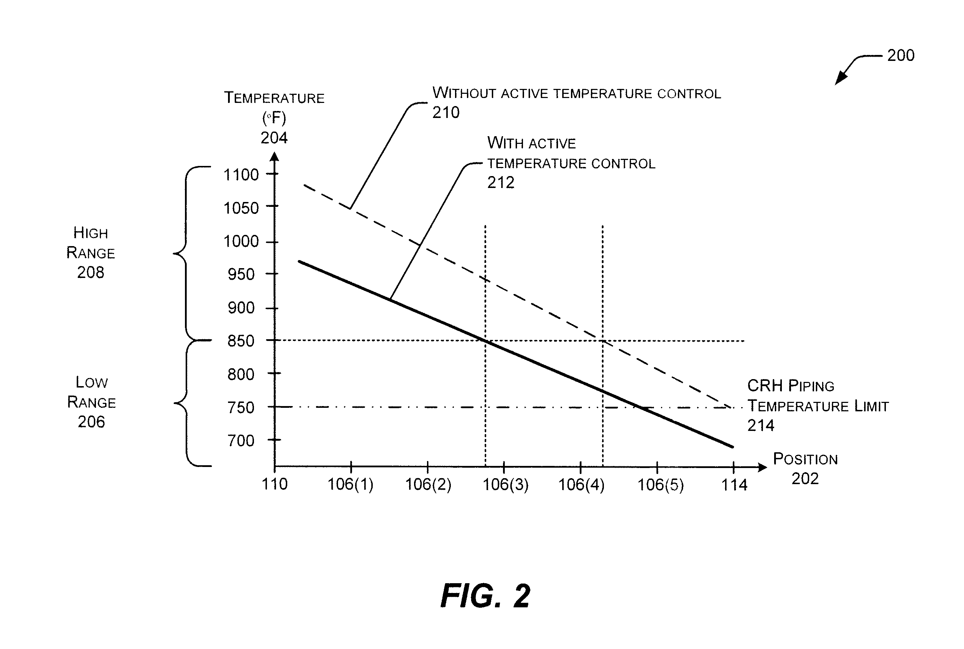

FIG. 2 is an illustrative graph 200 of temperature with and without active temperature control. In this graph, a horizontal axis indicates position 202 within the steam turbine 102. For example, the inlet 110 is positioned at the leftmost side of the axis while the exhaust outlet 114 is at the rightmost side. Along a vertical axis is depicted temperature 204 in degrees Fahrenheit. The number of stages 106 depicted by the position 202 as well as the temperatures 204 are shown for illustration, and not by way of limitation.

A low range 206 of temperatures is depicted as extending up to about 850°F. A high range 208 of temperatures is depicted as extending from about 850°F and up. These ranges are depicted for ease of discussion. The low range 206 and high range 208 are determined by engineering and operational characteristics associated with the materials and systems involved. For example, in some implementations, the low range 206 may extend up to about 950°F while the high range 208 extends from 950°F and up.

Due to thermodynamic effects and extraction of energy by the steam turbine 102, such as in the form of an electrical generator coupled to the shaft 104, temperatures of the steam 112 in the steam path decrease during passage through the steam turbine 102.

A plot of temperatures 204 for the different positions 202 without active temperature control 210 are depicted here. As shown here, the steam 112 remains in the high range 208 of above 850° F until after stage 106(4). As a result, components up through and including stage 106(4) are designed and constructed to operate in those high range 208 temperatures. This may require special materials, special construction, and so forth.

As also shown, without active temperature control 210, the plot continues such that at the exhaust outlet 114, the temperature is above about 750°F, which for the purposes of discussion may be a maximum CRH piping temperature limit 214. For example, carbon steel piping may be used as the CRH piping 116 when operated below the 750°F CRH piping temperature limit 214.

When the active temperature control unit 120 is active, temperatures of the steam 112 are decreased. A plot of temperatures in the steam turbine 102 with active temperature control 212 engaged depicts this drop. With the active temperature control 212 active, the stages 106(3) and 106(4) are now operating in the low range 206. As a result, at least these two stages, 106(3) and 106(4), as well as equipment between them may be designed to use materials suitable for the low range 206, thus reducing cost. For example, temperature control allows for the increased use of lower cost welded components further upstream, reducing overall cost of the rotor. Additionally, the temperature at the exhaust outlet 114 is now below the CRH piping temperature limit 214, allowing the use of less expensive materials in the CRH piping 116 and further reducing cost.

The plots 210 and 212 are shown as straight lines for ease of illustration and discussion. In some implementations these plots may describe various curves, steps, and so forth.

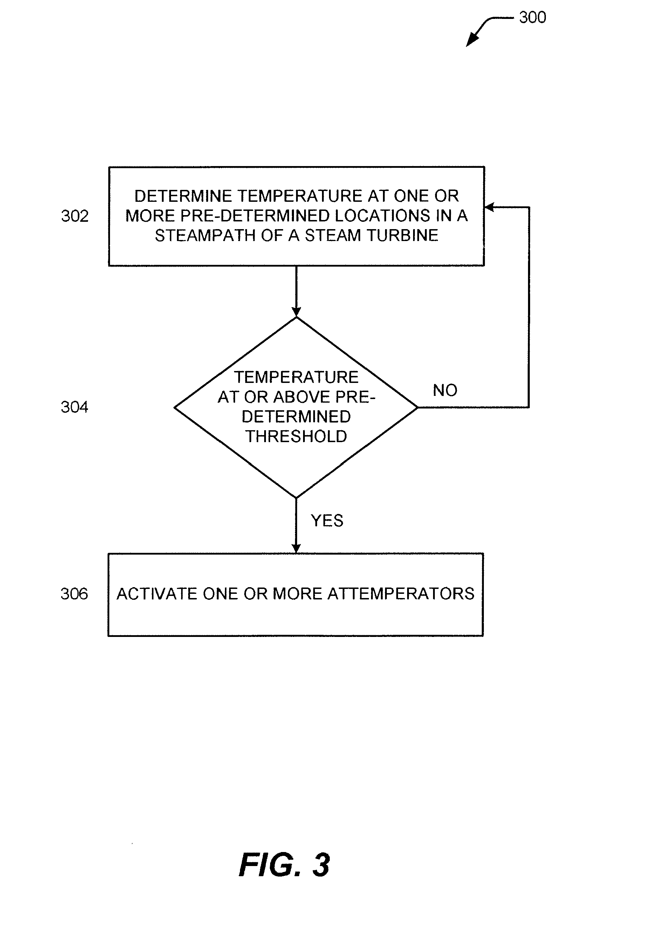

FIG. 3 is a flow diagram 300 of a process of using attemperators to actively control temperatures according to an embodiment of the invention. In some implementations, this process may be implemented at least in part by the active temperature control unit 120. The active temperature control unit 120 may comprise one or more of analog electronics devices, a processor, a computer-readable storage media, input/output devices, and so forth.

Block 302 determines a temperature at one or more pre-determined locations in a steam path of a steam turbine. The one or more pre-determined locations may comprise an exhaust outlet 114 of the steam turbine 102 prior to the exhaust 118 reaching the CRH piping 116, at one or more of the stages 106, between one or more stages 106, at the inlet 110, or a combination thereof.

In some implementations, determining the temperature may comprise receiving data from one or more sensors, such as the temperature sensors 122(1) and (2). The temperature at the one or more pre-determined locations may thus be measured directly. For example, the temperature may be measured at the stage 106(3) by the temperature sensor 122(2) and at the exhaust outlet 114 by the temperature sensor 122(1).

In another implementation, the temperature for the one or more pre-determined locations may be determined based at least in part on a temperature measurement at either a portion of the one or more pre-determined locations or at another location and inferred. For example, the temperature may be measured at the exhaust outlet 114 and used as a proxy to determine the temperature at the stage 106(3).

In yet another implementation, the temperature may be determined or calculated based at least in part on one or more operating conditions associated with the steam turbine 102. These one or more operating conditions may include, but are not limited to, flow through the steam turbine 102, output of a heat recovery steam generator coupled to the steam turbine, or the throttle setting of a gas turbine configured to generate steam for the steam turbine.

Block 304 determines when the temperature is at or above a pre-determined threshold. For example, as described above, the temperature sensor 122 at the exhaust outlet 114 may indicate that the temperature is above 750°F. When the temperature is at or above the pre-determined threshold, the process proceeds to block 306.

The pre-determined threshold may be set at or below a design maximum operating temperature for one or more materials proximate to the one or more pre-determined locations in the steam path. For example, the system may be configured to maintain the temperature of the CRH piping 116 below the 750° F CRH piping temperature limit 214. Temperatures above this limit may result in undesired wear and tear on the CRH piping 116, increase the likelihood of failure of the CRH piping 116, and so forth.

Block 306 activates one or more attemperators 108 configured to reduce the temperature at least at the one or more pre-determined locations. In some implementations, block 306 may result in a change of the setpoint from a HP throttle temperature to a HP steam turbine exhaust temperature, or other point in the steam path where the threshold is exceeded. Continuing the example, activation of the attemperators 108 may lower the temperature of the exhaust 118 at the exhaust outlet 114 down to within the CRH piping temperature limit 214. In some implementations, all attemperators 108 may be activated at once, a portion of the attemperators 108 may be activated, the attemperators 108 may be operated at various flow rates, or a combination thereof may be used.

As described above, in some implementations, cooling air may be injected or leaked into the gas turbine exhaust which is used to supply the steam 112 to the steam turbine 102. This cooling air may be used in addition to, or instead of, the attemperators 108. Activation of the attemperators 108 may be coordinated with other operating changes to the steam turbine 102 or other equipment coupled to the steam turbine 102. Rapid change in steam temperature can impact the estimated life of come steam path components so in some implementations, the attemperators 108 may be activated and deactivated over a period of time to smooth out temperature changes in the steam path.

Returning to block 304, when the temperature is below a pre-determined threshold, the one or more attemperators 108 may be deactivated and the process may return to block 302. This deactivation allows the temperature to rise back to a level suitable for intended operation of the steam turbine, the heat recovery steam generator coupled to the CRH piping 116, and so forth.

It is understood that in some implementations the inverse of the determination at block 304 may be used as well. For example, when the temperature is below a pre-determined threshold, the one or more attemperators 108 may be deactivated.

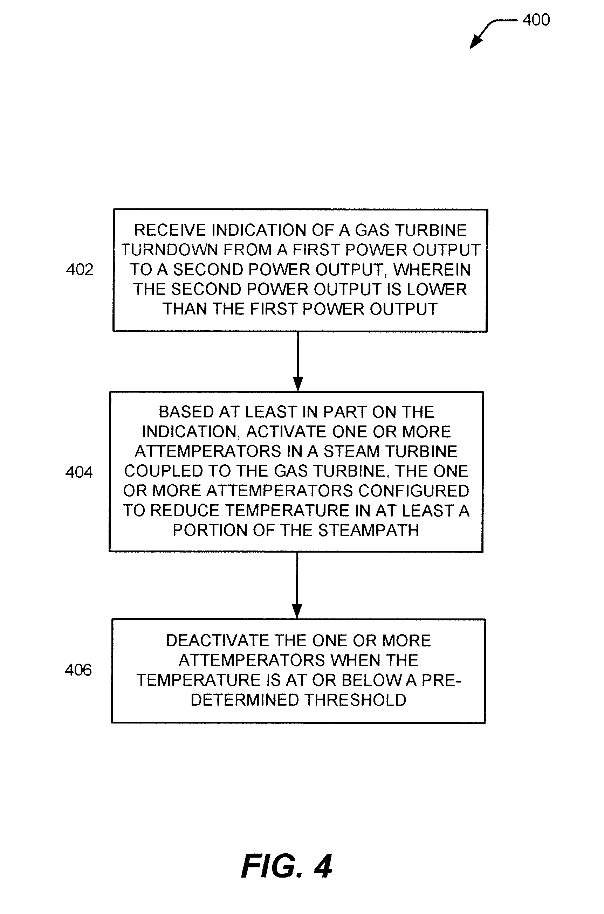

FIG. 4 is a flow diagram 400 of another process of using attemperators to actively control temperatures. As above with regard to FIG. 3, in some implementations, this process may be implemented at least in part by the active temperature control unit 120.

Block 402 receives an indication of a gas turbine turndown from a first power output to a second power output, wherein the second power output is lower than the first power output. For example, as electrical demand decreases during evening hours, one or more gas turbines coupled to the steam turbine 102 in a combined cycle power plant may be throttled back to output less power. The indication may comprise signals or data received by the active temperature control unit 120. The indication may comprise an indicator from the gas turbine, or from other devices coupled to the gas turbine and the steam turbine 102. For example, the indication may be generated by a change in the heat recovery steam generator supplying the steam 112 to the steam turbine 102.

Block 404, based at least in part on the indication, activates one or more attemperators 108 in a steam turbine 102 coupled to the gas turbine. As described above, the one or more attemperators 108 are configured to reduce a temperature in at least a portion of a steam path of the steam turbine 102. For example, the steam path may comprise CRH piping 116, and the attemperators 108 are configured to reduce temperature of the exhaust 118 such that the CRH piping 116 remains below a pre-determined temperature limit. The one or more attemperators 108 are configured to inject a coolant into at least a portion of the steam path. This coolant may comprise one or more of water, steam, other condensable fluid and so forth.

As described above, in some implementations cooling air may be injected or leaked into the gas turbine exhaust which supplies the steam 112 to the steam turbine 102. This cooling air may be used in addition to, or instead of, the attemperators 108.

In some implementations, in addition to the indication of a turndown, activating the one or more attemperators 108 may be based at least in part on monitoring a temperature in at least a portion of the steam path. For example, the one or more attemperators 108 may be activated after indication of a turndown and an increase in temperature in at least a portion of the steam path. As described above with regard to FIG. 3, the temperature may be measured, inferred, calculated, or otherwise determined.

Block 406 deactivates the one or more attemperators 108 when the temperature is at or below a pre-determined threshold. As described above, this prevents the temperatures in the steam path from dropping too low for desired operation.

Illustrative systems and methods are described above. Some or all of these systems and methods may, but need not, be implemented at least partially by an architecture such as those shown in FIGS. 1-4. It should be understood that certain acts in the methods need not be performed in the order described, may be rearranged or modified, and/or may be omitted entirely, depending on the circumstances. Also, any of the acts described above with respect to any method may be implemented by any number of processors or other computing devices based on instructions stored on one or more computer-readable storage media ("CRSM"). The CRSM may include, but is not limited to, random access memory ("RAM"), flash RAM, magnetic media, optical media, and so forth.

This written description uses examples to disclose the invention, including the best mode, and also to enable any person skilled in the art to practice the invention, including making and using any devices or systems and performing any incorporated methods. The patentable scope of the invention is defined by the claims, and may include other examples that occur to those skilled in the art. Such other examples are intended to be within the scope of the claims if they have structural elements that do not differ from the literal language of the claims, or if they include equivalent structural elements with insubstantial differences from the literal language of the claims.

Various aspects and embodiments of the present invention are defined by the following numbered clauses:
1. A system, comprising:
   a steam turbine;
   one or more attemperators coupled to the steam turbine; and
   an active temperature control unit coupled to the one or more attemperators and configured to determine temperature of one or more points associated with the steam turbine and activate at least a portion of the one or more attemperators at least partly in response to the determination.
2. The system of clause 1, wherein the attemperators are configured to inject a coolant into at least a portion of the steam turbine.
3. The system of clause 1 or clause 2, the one or more attemperators disposed within a high pressure section of the steam turbine.
4. The system of any preceding clause, the one or more attemperators disposed within an intermediate pressure section of the steam turbine.
5. The system of any preceding clause, the determination of the temperature based at least in part on one or more operating conditions associated with the steam turbine.
6. The system of any preceding clause, the one or more operating conditions comprising one or more of flow through the steam turbine, output of a heat recovery steam generator coupled to the steam turbine, load condition, or exhaust condition of a gas turbine configured to generate steam for the steam turbine.
7. The system of any preceding clause, further comprising a temperature sensor proximate to the one or more points and the determination of the temperature based at least in part on a signal from the temperature sensor.
8. The system of any preceding clause, further comprising cold reheat piping coupled to the steam turbine, and wherein the one or more points include at least a portion of the cold reheat piping.
9. The system of any preceding clause, wherein the one or more points comprise one or more of a plurality of stages.
10. A method comprising:
   determining a temperature at one or more pre-determined locations in a steam path of a steam turbine;
   when the temperature is at or above a pre-determined threshold, activating one or more attemperators configured to reduce the temperature at least at the one or more pre-determined locations; and
   when the temperature is below a pre-determined threshold, deactivating the one or more attemperators.
11. The method of any preceding clause, the one or more pre-determined locations comprising an exhaust of the steam turbine prior to cold reheat piping.
12. The method of any preceding clause, the determining the temperature comprising receiving data from one or more temperature sensors.
13. The method of any preceding clause, the determining the temperature comprising calculating a temperature based at least in part on one or more operating conditions associated with the steam turbine.
14. The method of any preceding clause, the one or more operating conditions associated with the steam turbine comprising one or more of flow through the steam turbine, output of a heat recovery steam generator coupled to the steam turbine, load condition, or exhaust condition of a gas turbine configured to generate steam for the steam turbine.
15. The method of any preceding clause, the pre-determined threshold set at or below a design maximum operating temperature for one or more materials proximate to the one or more pre-determined locations in the steam path.
16. One or more computer-readable media storing computer-executable instructions that, when executed by at least one processor, configure the at least one processor to perform operations comprising:
   receiving indication of a gas turbine turndown from a first power output to a second power output, wherein the second power output is lower than the first power output; and
   based at least in part on the indication, activating one or more attemperators in a steam turbine coupled to the gas turbine, the one or more attemperators configured to reduce a temperature in at least a portion of a steam path of the steam turbine.
17. The computer-readable media of any preceding clause, further comprising deactivating the one or more attemperators when the temperature is at or below a pre-determined threshold.
18. The computer-readable media of any preceding clause, further comprising monitoring a temperature in at least a portion of the steam path and the activating the one or more attemperators further based at least in part on the temperature.
19. The computer-readable media of any preceding clause, wherein the steam path comprises cold reheat piping.
20. The computer-readable media of any preceding clause, wherein the attemperators are configured to inject a coolant into at least a portion of the steam path.

## Claims

1. A system (100), **characterised by**:
a steam turbine (102);
one or more attemperators (108) coupled to the steam turbine (102); and
an active temperature control unit (120) coupled to the one or more attemperators (108) and configured to determine temperature of one or more points associated with the steam turbine (102) and activate at least a portion of the one or more attemperators (108) at least partly in response to the determination.

2. The system of claim 1, wherein the attemperators (108) are configured to inject a coolant into at least a portion of the steam turbine (102).

3. The system of claim 1 or claim 2, the one or more attemperators (108) disposed within a high pressure section of the steam turbine (102).

4. The system of any preceding claim, the one or more attemperators (108) disposed within an intermediate pressure section of the steam turbine (102).

5. The system of any preceding claim, the determination of the temperature based at least in part on one or more operating conditions associated with the steam turbine (102).

6. The system of any preceding claim, the one or more operating conditions comprising one or more of flow through the steam turbine (102), output of a heat recovery steam generator coupled to the steam turbine (102), load condition, or exhaust (118) condition of a gas turbine configured to generate steam for the steam turbine (102).

7. The system of any preceding claim, further **characterised by** a temperature sensor proximate to the one or more points and the determination of the temperature based at least in part on a signal from the temperature sensor (122).

8. The system of any preceding claim, further **characterised by** cold reheat piping (116) coupled to the steam turbine (102), and wherein the one or more points include at least a portion of the cold reheat piping (116).

9. The system of any preceding claim, wherein the one or more points are **characterised by** one or more of a plurality of stages (106).

10. A method (300) **characterised by**:
determining a temperature at one or more pre-determined locations (302) in a steam path of a steam turbine (102);
when the temperature is at or above a pre-determined threshold, activating one or more attemperators (108) configured to reduce the temperature at least at the one or more pre-determined locations (306); and
when the temperature is below a pre-determined threshold, deactivating the one or more attemperators (108).

11. The method of claim 10, the one or more pre-determined locations comprising an exhaust (118) of the steam turbine (102) prior to cold reheat piping (116).

12. The method of claim 10 or claim 11, the determining the temperature comprising receiving data from one or more temperature sensors (122).

13. The method of any of claims 10 to 12, the determining the temperature comprising calculating a temperature based at least in part on one or more operating conditions associated with the steam turbine (102).

14. The method of any of claims 10 to 13, the one or more operating conditions associated with the steam turbine (102) **characterised by** one or more of flow through the steam turbine (102), output of a heat recovery steam generator coupled to the steam turbine (102), load condition, or exhaust (118) condition of a gas turbine configured to generate steam (112) for the steam turbine (102).

15. The method of any of claims 10 to 14, the pre-determined threshold set at or below a design maximum operating temperature for one or more materials proximate to the one or more pre-determined locations in the steam path (404).
